# EUROPÄISCHE PATENTANMELDUNG

(11) **EP 2 927 593 A1**
(43) Veröffentlichungstag der Anmeldung: **07.10.2015**
(21) Anmeldenummer: 14162719.0
(22) Anmeldetag: 31.03.2014
(51) Int. Cl.: F23R 3/00, F23R 3/28, F23R 3/46, F02C 7/08, F02C 7/18

(54) **Silobrennkammer für eine Gasturbine**

(71) Anmelder: Siemens Aktiengesellschaft, 80333 München (DE)
(72) Erfinder: Wilke, Martin, 45276 Essen (DE); Waltke, Ulrich, 45468 Mülheim an der Ruhr (DE); Johnson, David, 10117 Berlin (DE); Lapp, Patrick, 13359 Berlin (DE); Pipke, Romina, 10777 Berlin (DE); Rexin, Olaf, 15366 Neuenhagen bei Berlin (DE)

(57) **Zusammenfassung**

Die Erfindung gibt eine Silobrennkammer (1) für eine Gasturbine (70) an, welche Folgendes umfasst: Ein durch eine innere Wandung (2) und einen Flammrohrboden (8) gebildetes Flammrohr (12), welches einen Brennraum (10) begrenzt, eine äußere Wandung (6), welche die innere Wandung (2) unter Ausbildung eines Hohlraumes (4) umgibt, wenigstens eine strömungstechnisch mit dem Hohlraum (4) verbundene Ableitung (28), eine lokal strömungstechnisch vom Hohlraum (4) getrennte erste Sammelkammer (14) mit wenigstens einer Zuleitung (16), wobei die wenigstens eine Ableitung (28) des Hohlraums (4) und die wenigstens eine Zuleitung (16) der ersten Sammelkammer (14) über einen Wärmetauscher (74) strömungstechnisch koppelbar sind, und eine Anzahl von Brennern (18), welche jeweils ausgangsseitig durch eine Öffnung (20) im Flammrohrboden (8) in den Brennraum (10) münden und zur Sauerstoffversorgung (35) strömungstechnisch mit der ersten Sammelkammer (14) verbunden sind. Weiter gibt die Erfindung eine Gasturbine (70) und ein Wärmekraftwerk (68) mit einer derartigen Silobrennkammer (1) an.

## Beschreibung

Die Erfindung betrifft eine Silobrennkammer für eine Gasturbine, umfassend ein durch eine innere Wandung und einen Flammrohrboden gebildetes Flammrohr, welches einen Brennraum begrenzt, eine äußere Wandung, welche die innere Wandung unter Ausbildung eines Hohlraumes umgibt, und eine Anzahl von Brennern, welche jeweils ausgangsseitig durch eine Öffnung im Flammrohrboden in den Brennraum münden.

In einer Gasturbine wird die Verbrennungswärme eines Brennstoffes in mechanische Arbeit umgewandelt. Der thermodynamische Kreisprozess, welcher diese Umwandlung beschreibt, entspricht näherungsweise dem Joule-Kreisprozess.

Dabei wird zunächst ein sauerstoffhaltiges Arbeitsgas, in der Praxis meist Luft, von einer Verdichterkammer verdichtet, wobei es sich von einer Ausgangstemperatur *T₁* auf *T₂* erwärmt, und der Druck steigt. Im zweiten Schritt wird dem Arbeitsgas in einer Brennkammer bei konstantem Druck durch Verbrennen des zugemischten Brennstoffes Wärme zugeführt, wodurch die Temperatur weiter auf *T₃* ansteigt. Das verdichtete, erhitzte Arbeitsgas verrichtet dann mechanische Arbeit, indem es expandiert und dabei über Schaufeln die Turbine antreibt. Hierbei sinkt die Temperatur auf *T₄*. Auch der Druck sinkt. Ein Teil der mechanischen Arbeit, welche an der Turbine gewonnen wird, kann zur Verdichtung im ersten Schritt herangezogen werden. In einem letzten Schritt wird dem Arbeitsgas bei konstantem Druck durch Kühlung Abwärme entzogen, wodurch die Temperatur wieder auf *T₁* absinkt. Für die Näherung eines idealen Gases ergibt sich hierbei der Wirkungsgrad des Prozesses zu *η*=1*-*(*T*₄*-T*₁)/(*T*₃*-T*₂).

Aufgrund der starken Zunahme regenerativer Energieerzeugung in immer mehr Industrieländern kommt Wärmekraftwerken, welche Gasturbinen einsetzen, eine immer höhere Bedeutung zu. Die fehlende Planungssicherheit, welche eine Energieerzeugung durch Solarenergie oder Windkraft aus naturgegebenen Gründen mit sich bringt, muss durch ausreichende Reservekapazitäten in der Erzeugung ausgeglichen werden, welche zudem möglichst schnell die angeforderte Leistung bereitzustellen imstande sind. Hier sind Kraftwerke, welche mit Gasturbinen betrieben werden, infolge der Flüchtigkeit des verwendeten Brennstoffes gegenüber den thermodynamisch trägeren Kohlekraftwerken oder gar Kernreaktoren deutlich im Vorteil.

Der Wirkungsgrad einer Gasturbine als Quotient der erzeugten Energie über den totalen Energieinhalt des eingesetzten Brennstoffes, beträgt selbst bei einer modernen Anlage deutlich unter 50%, da die durch Verbrennung zugeführte Wärme als Abwärme wieder abgeführt wird, und somit der Energieinhalt der Abwärme nach der Expansion des Arbeitsgas nicht mehr genutzt wird.

Der Wirkungsgrad kann jedoch durch Nutzung dieser Abwärme erhöht werden, indem beispielsweise in einem zweiten Kreislauf durch die Abwärme eine Dampfturbine eines zweiten Wärmekraftwerkes betrieben wird (sogenannte "combined cycle"- oder "Gas-und-Dampf"-Technologie). Hierdurch kann der Wirkungsgrad um den Grad der Abwärme, welche der Dampfturbine zugeführt werden kann, verbessert werden. Für diese Verbesserung des Wirkungsgrades steigt jedoch der Systemaufwand an, da nun der gesamte Dampfkreislauf an die Gasturbine anzubinden und regelungstechnisch auf diese abzustimmen ist, wodurch sich die Investitionskosten einer Anlage erhöhen. Überdies können viele bereits existierende Wärmekraftwerke mit Gasturbinen aufgrund der Dimensionen der Komponenten eines Dampfkreislaufes nicht ohne Weiteres mit einem solchen nachgerüstet werden.

Eine mögliche weiterführende Lösung kann hierbei sein, die Abwärme des Abgases der Gasturbine durch die Einbindung in einen Rekuperatorprozess dazu zu nutzen, das im ersten Schritt vorverdichtete Arbeitsgas weiter zu erwärmen, bevor die Verbrennungswärme des Brennstoffes zugeführt wird. Da in vielen Gasturbinen die Temperatur *T₂* des vorverdichteten Arbeitsgases unter der Abwärmetemperatur *T₄* liegt, muss im idealen Modell die dieser Differenz *T*₄-*T*₂ entsprechende Wärmemenge dem Arbeitsgas nicht durch den Energieinhalt des Brennstoffes zugeführt werden, sondern kann eingespart werden, was zu einer entsprechenden Erhöhung des Wirkungsgrades führt.

Ein ungelöstes Problem stellt hierbei die technische Umsetzung der Einbindung insbesondere eines bestehenden Gasturbinen-Systems in einen Rekuperatorprozess dar.

Es ist Aufgabe der Erfindung, eine Gasturbine unter möglichst geringen Modifikationen im Vergleich zu einer Ausgestaltung, die keinen Wärmetauscher vorsieht, an einen solchen koppelbar zu gestalten.

Die Aufgabe wird erfindungsgemäß gelöst durch eine Silobrennkammer für eine Gasturbine, umfassend ein durch eine innere Wandung und einen Flammrohrboden gebildetes Flammrohr, welches einen Brennraum begrenzt, eine äußere Wandung, welche die innere Wandung unter Ausbildung eines Hohlraumes umgibt, wenigstens eine strömungstechnisch mit dem Hohlraum verbundene Ableitung, eine lokal strömungstechnisch vom Hohlraum getrennte erste Sammelkammer mit wenigstens einer Zuleitung, wobei die wenigstens eine Ableitung des Hohlraums und die wenigstens eine Zuleitung der ersten Sammelkammer über einen Wärmetauscher strömungstechnisch koppelbar sind, und eine Anzahl von Brennern, welche jeweils ausgangsseitig durch eine Öffnung im Flammrohrboden in den Brennraum münden und zur Sauerstoffversorgung strömungstechnisch mit der ersten Sammelkammer verbunden sind.

Unter einer Begrenzung des Brennraumes ist hierbei ein Abschluss in fünf Raumrichtungen zu verstehen, so dass ein Gas in einer sechsten Raumrichtung zuströmen oder entweichen kann. Unter einer lokalen strömungstechnischen Trennung ist zu verstehen, dass in der Silobrennkammer selbst oder in ihrer unmittelbaren Umgebung keine strömungstechnische direkte Verbindung zwischen der ersten Sammelkammer und dem Hohlraum existiert, welche nicht durch einen Brenner führen würde. Im Folgenden ist unter einer Trennung, soweit nichts anderes spezifiziert ist, immer eine lokale strömungstechnische Trennung in einem zu obigen Ausführungen analogen Sinn zu verstehen.

Die Erfindung geht dabei von der Überlegung aus, dass ein vorverdichtetes Arbeitsgas der Gasturbine vorzugsweise zwischen dem Verdichter und der Brennkammer entnommen und nach Erwärmung durch einen Wärmetauscher nahe der Brennkammer wieder zugeführt wird. Hierbei ist bevorzugt eine lokale strömungstechnische Trennung des vorverdichteten, noch nicht erwärmten Arbeitsgases vom durch den Wärmetauscher erwärmten Arbeitsgas zu bewerkstelligen, um zu verhindern, dass bereits erwärmtes Arbeitsgas erneut zum Wärmetauscher geführt wird, da das Arbeitsgas beim Verlassen des Wärmetauschers bereits eine Temperatur nahe der Abwärmetemperatur aufweist.

Eine erste Erkenntnis der Erfindung ist hierbei, dass sich aufgrund der strömungstechnischen Vorgänge in einer Gasturbine eine derartige Trennung unter der Randbedingung möglichst geringer baulicher Modifikationen in einer Silobrennkammer besonders gut realisieren lässt, da in einer solchen das vorverdichtete Arbeitsgas durch den Hohlraum zwischen innerer und äußerer Wandung aus dem turbulenten Bereich der Schaufeln der Gasturbine weggeführt wird. Eine Trennung der genannten Ströme des Arbeitsgases kann somit bevorzugt dadurch erfolgen, dass eine Entnahme des vorverdichteten Arbeitsgases im Bereich des Hohlraumes erfolgt (im Folgenden wird als vorverdichtetes Arbeitsgas das Arbeitsgas bezeichnet, welches bereits einen Verdichter passiert hat, aber noch keinen Wärmetauscher).

Für einen vorteilhaften Wirkungsgrad sollte das bereits erwärmte Arbeitsgas (im Folgenden wird als bereits erwärmtes Arbeitsgas das Arbeitsgas bezeichnet, welches einen Verdichter und einen Wärmetauscher passiert hat), welches einem Brenner zu dessen Sauerstoffversorgung zugeführt werden soll, möglichst wenig Wärme an das Rohrleitungssystem vom Wärmetauscher zum Brenner abgeben. Eine weitere für die Erfindung wesentliche Erkenntnis ist somit, eine Sammelkammer in unmittelbarer Nähe des oder jedes Brenners vorzusehen, und das erwärmte Arbeitsgas dieser in möglichst wenigen Rohrleitungen zuzuführen, um die Oberfläche hinsichtlich eines gegebenen Durchflussvolumens der Rohrleitungen möglichst gering zu halten. Der oder jeder Brenner kann dann zur Sauerstoffversorgung über eine möglichst kurze Leitung mit der Sammelkammer verbunden werden, oder die Sammelkammer kann den oder jeden Brenner teilweise so umgeben, dass eine direkte strömungstechnische Verbindung zwischen der Sammelkammer und der Sauerstoffversorgung des oder jedes Brenners besteht. Insbesondere für eine Silobrennkammer mit mehr als einem Brenner ist dies vorteilhaft.

Günstigerweise weist der Flammrohrboden, dem Brennraum abgewandt, ein Stützgerüst auf. Durch ein derartiges Stützgerüst kann im Betrieb die Form des Flammrohrbodens gegen den Druck aus dem Brennraum durch die Verbrennung stabil gehalten werden.

Bevorzugt wird hierbei das Stützgerüst durch zum Flammrohrboden senkrechte Lamellen gebildet. Insbesondere können die Lamellen hierbei auf dem Flammrohrboden drehsymmetrisch angeordnet sein. Eine solche Ausgestaltung bietet eine besonders hohe Stabilität bei einem gegebenen Materialeinsatz.

Als vorteilhaft erweist sich, wenn die innere Wandung und/oder der Flammrohrboden eine Vielzahl von Bohrungen aufweisen. Derartige Bohrungen im Flammrohrboden sind dabei insbesondere vorteilhaft, falls sich der Hohlraum bis über den Flammrohrboden erstreckt. Durch derartige Bohrungen kann vorverdichtetes Arbeitsgas aus dem Hohlraum infolge der Druckdifferenz in geringen Mengen in den Brennraum strömen, wo es zur Kühlung des Materials der inneren Wandung und/oder des Flammrohrbodens beiträgt. Dies reduziert die Temperatur für die Werkstoffe, welche für die innere Wandung und/oder den Flammrohrboden verwendet werden, ausgelegt werden sollten.

Zweckmäßigerweise erstreckt sich der Hohlraum über den Flammrohrboden, wobei die erste Sammelkammer gegen den Hohlraum durch einen Zwischenboden getrennt ist. Dies ermöglicht eine Kühlung nicht nur der inneren Wandung sondern auch des Flammrohrbodens durch umströmendes, vorverdichtetes Arbeitsgas und ggf. der dem Brennraum zugewandten Seite des Flammrohrbodens durch dünne Bohrungen im Flammrohrboden. Überdies kann sich der Druck des vorverdichteten Arbeitsgases bei einer solchen Geometrie des Hohlraumes besonders gut über diesen verteilen, was zu geringen Turbulenzen im Bereich der oder jeder Ableitung führt.

Hierbei wird der Zwischenboden bevorzugt durch das Stützgerüst gegen den Hohlraum abgestützt. Dies erhöht die Stabilität der Anordnung des Zwischenbodens. Insbesondere können hierbei Strömungslöcher im Stützgerüst, beispielsweise in Lamellen, vorgesehen sein, um die Druckverteilung im Hohlraum durch das Stützgerüst möglichst wenig zu beeinträchtigen. Insbesondere kann der Zwischenboden auch am Stützgerüst befestigt werden, so dass er gegebenenfalls Druckdifferenzen zwischen dem Hohlraum und der Sammelkammer besser widerstehen kann.

Alternativ kann das Stützgerüst auch durch bevorzugt passgenaue Einschnitte im Zwischenboden in die erste Sammelkammer ragen. Dies ist insbesondere von Vorteil, wenn eine Silobrennkammer für die Verwendung in Verbindung mit einem Wärmetauscher nachgerüstet werden soll, und ein bereits bestehendes Stützgerüst in die nachzurüstende Sammelkammer integriert werden soll. Insbesondere können das Stützgerüst und der Zwischenboden an den Fugen der Einschnitte gemeinsam fixiert werden, beispielsweise durch Nieten- oder Schraubenverbindungen, um die Stabilität zu erhöhen.

Vorteilhafterweise ist der oder jeder Brenner durch eine Öffnung im Zwischenboden in den Hohlraum geführt. Somit kann die Sauerstoffversorgung eine des oder jedes Brenners direkt in der Sammelkammer erfolgen.

Als zweckmäßig kann sich hierbei auch erweisen, wenn der oder jeder Brenner von einem Stutzen umschlossen wird, welcher vom Zwischenboden zur jeweiligen Öffnung des Brenners im Flammrohrboden führt, und durch welchen der Brenner strömungstechnisch vom Hohlraum getrennt ist. Durch einen solchen Stutzen wird das vorverdichtete Arbeitsgas, welches den Hohlraum durchströmt, von der Wand des jeweiligen Brenners ferngehalten. Die Wand wird nur von bereits erwärmtem Arbeitsgas umströmt.

Dies kann folgende nützliche Konsequenzen haben: Einerseits kann durch die Trennung verhindert werden, dass vorverdichtetes Arbeitsgas durch die Wand eines Brenners erwärmt wird, was eine eventuelle Kühlung des Flammrohrbodens durch diesen Anteil des Arbeitsgases beeinträchtigen würde. Andererseits würde, wenn vorverdichtetes Arbeitsgas einen Brenner direkt unter Austausch von Wärme umströmt, der Wärmeinhalt des bereits erwärmten Arbeitsgases sinken, welches sich im jeweiligen Brenner zur Sauerstoffversorgung des Brennstoffes befindet. Die der Temperaturdifferenz entsprechende Wärmemenge ginge entweder verloren oder müsste durch den Energieinhalt des Brennstoffes ausgeglichen werden, was den Wirkungsgrad verringern würde. Somit wirkt sich ein den Brenner umschließender Stutzen vorteilhaft auf die Kühlung des Flammrohrbodens und auf den Gesamtwirkungsgrad aus.

In diesem Zusammenhang kann es sich als zweckmäßig erweisen, wenn der oder jeder Stutzen eine thermische Isolationsschicht umfasst. Hierdurch kann die thermische Wechselwirkung der Wand eines Brenners mit dem vorverdichteten Arbeitsgas weiter verringert werden, indem auch die mittelbare Wechselwirkung über ein bereits erwärmtes Arbeitsgas, das in einem Stutzen den Brenner umströmt, durch die Isolationsschicht verringert wird.

Überdies kann es auch günstig sein, wenn der Zwischenboden eine thermische Isolationsschicht umfasst. Auch dies verringert den Wärmeaustausch zwischen dem vorverdichteten Arbeitsgas im Hohlraum und dem bereits erwärmten Arbeitsgas in der Sammelkammer, und kann daher den Wirkungsgrad verbessern.

In einer weiter vorteilhaften Ausgestaltung der Erfindung ist die wenigstens eine Ableitung strömungstechnisch mit dem Hohlraum über eine zweite Sammelkammer verbunden, zu deren Ausbildung der Abstand zwischen der inneren Wandung und der äußeren Wandung vergrößert ist, und wobei die zweite Sammelkammer strömungstechnisch lokal von der ersten Sammelkammer getrennt ist. Insbesondere kann hierbei die Abstandsvergrößerung bis zu einem Abstand hin reichen, welcher mehr als der doppelte mittlere Abstand zwischen innerer Wandung und äußerer Wandung beträgt. Insbesondere kann der Querschnitt der zweiten Sammelkammer bzw. die Abstandsvergrößerung zwischen der inneren Wandung und der äußeren Wandung zur Ausbildung der zweiten Sammelkammer um das Flammrohr umlaufend variieren. Eine Sammelkammer kann hierbei strömungstechnisch optimiert werden, wodurch sich Turbulenzen bei der Entnahme des vorverdichteten Arbeitsgases aus dem Hohlraum verringern lassen und somit Druckverlusten entgegengewirkt wird, welche den Wirkungsgrad der Anlage beeinträchtigen würden.

Insbesondere kann hierbei die zweite Sammelkammer als eine das Flammrohr umlaufende Ringkammer ausgebildet sein. Dies hat eine möglichst symmetrische Druckverteilung des vorverdichteten Arbeitsgases über die Sammelkammer zur Folge, wodurch einem Druckverlust besonders wirksam begegnet wird.

Je nach Anordnung der Brenner im Flammrohrboden kann es für die Aufrechterhaltung des Verdichtungsdruckes im bereits erwärmten Arbeitsgas bei der Hinführung zu den Brennern auch von Vorteil sein, wenn die erste Sammelkammer eine das Flammrohr umlaufende Ringkammer umfasst.

Hierbei kann es nützlich sein, wenn wenigstens eine umlaufende Ringkammer eine Anzahl von Stützrippen aufweist. Diese können die bauliche Stabilität der betreffenden Ringkammer erhöhen, und somit den Materialaufwand verringern. Insbesondere können die Stützrippen hierbei um das Flammrohr in paralleler Richtung der inneren Wandung verlaufen.

Günstigerweise sind die umlaufende Ringkammer der ersten Sammelkammer und die als Ringkammer ausgebildete zweite Sammelkammer durch einen das Flammrohr umlaufenden Flansch voneinander getrennt, wobei die umlaufende Ringkammer der ersten Sammelkammer das Flammrohr im Bereich des Flammrohrbodens umläuft. Insbesondere kann hierbei eine gedachte Verlängerung des Flammrohrbodens an der Ringkammer der ersten Sammelkammer anliegen oder die Ringkammer schneiden. Eine Anordnung der Ringkammer der ersten Sammelkammer in der Nähe des Flammrohrbodens hat den Vorteil, dass die dort erzielte Druckverteilung des bereits erwärmten Arbeitsgases ohne große Verluste an den oder jeden Brenner weitergegeben werden kann. Indem die als Ringkammer ausgebildete zweite Sammelkammer durch einen Flansch getrennt direkt an der Ringkammer der ersten Sammelkammer angeordnet wird, lässt sich durch vergleichsweise geringen konstruktiven Aufwand eine besonders hohe Stabilität erzielen.

Zweckmäßigerweise umfasst hierbei der Zwischenboden eine das Flammrohr auf dem Flansch unter Ausbildung einer umlaufenden Kammer umlaufende Manschette, wobei die umlaufende Kammer mit dem Hohlraum durch eine Anzahl von Bohrungen im Flansch strömungstechnisch verbunden ist. Durch eine derartige umlaufende Kammer ist es möglich, die innere Wandung noch im Bereich der Ringkammer der ersten Sammelkammer mit vorverdichtetem Arbeitsgas aus dem Hohlraum zu kühlen. Bevorzugt können dabei die Bohrungen im Wesentlichen parallel zur inneren Wandung verlaufen. Insbesondere kann sich die umlaufende Kammer bis zum Rand des Flammrohrbodens erstrecken, und insbesondere kann die umlaufende Manschette eine thermische Isolationsschicht umfassen.

Alternativ kann der Zwischenboden einen umlaufenden Bund aufweisen, welcher am Flansch anliegt, so dass der Hohlraum sich von der als Ringkammer gebildeten zweiten Sammelkammer weiter über den Flammrohrboden erstreckt, und von der Ringkammer der ersten Sammelkammer durch den umlaufenden Bund des Zwischenbodens getrennt ist.

Bevorzugt ist das Flammrohr im Wesentlichen zylinderförmig. Hierunter ist geometrisch ein senkrechter Zylinder zu verstehen, dessen Grundfläche rotations- oder hochzählig drehsymmetrisch ist. Eine derartige Geometrie erlaubt eine besonders einfache Konstruktion bei einer vergleichsweise vorteilhaften Druckverteilung sowohl im Hohlraum als auch im Brennraum.

Insbesondere ist hierbei die Anordnung des oder jedes Brenners im Flammrohrboden drehsymmetrisch, was sich günstig auf die Druckverteilung im Brennraum und damit auf die Expansion des mit Brennstoff gemischten, verbrannten Arbeitsgases auswirkt, und somit zu einem vorteilhaften Wirkungsgrad beiträgt.

In einer weiter vorteilhaften Ausgestaltung der Erfindung wird die erste Sammelkammer durch eine auf die äußere Wandung geflanschte Haube, insbesondere in Verlängerungsrichtung des Flammrohrs, begrenzt. Insbesondere lassen sich in eine solche Haube Rohrleitungen, Öffnungen für Brenner und ggf. Halterungen für einen Zwischenboden integrieren, was insbesondere das Nachrüsten einer bestehenden Gasturbine zur Verwendung mit einem Wärmetauscher vereinfacht.

Die Erfindung gibt weiter eine Gasturbine und ein Wärmekraftwerk mit einer entsprechenden Gasturbine an. Die Gasturbine umfasst hierbei wenigstens eine Silobrennkammer der vorbeschriebenen Art, und einen insbesondere als Rekuperator ausgebildeten Wärmetauscher, wobei wenigstens eine Ableitung des Hohlraums der oder jeder Silobrennkammer und wenigstens eine Zuleitung der ersten Sammelkammer der oder jeder Silobrennkammer über den Rekuperator strömungstechnisch gekoppelt sind.

Die für die Silobrennkammer und ihre Weiterbildungen genannten Vorteile können dabei sinngemäß auf die Gasturbine und auf das die Gasturbine umfassende Wärmekraftwerk übertragen werden.

Nachfolgend wird ein Ausführungsbeispiel der Erfindung anhand einer Zeichnung näher erläutert. Hierbei zeigen jeweils schematisch:
- FIG 1: in Querschnittsdarstellung eine Silobrennkammer mit einer über dem Flammrohrboden angeordneten ersten Sammelkammer und einer als Ringkammer ausgebildeten zweiten Sammelkammer,
- FIG 2: in Querschnittsdarstellung eine Silobrennkammer mit einer eine Ringkammer umfassenden ersten Sammelkammer und einer als Ringkammer ausgebildeten zweiten Sammelkammer.
- FIG 3: eine alternative Ausgestaltung der Silobrennkammer nach FIG 2,
- FIG 4: in Querschnittsdarstellung eine Silobrennkammer mit einem sich über den Flammrohrboden erstreckenden Hohlraum und Stutzen für die Brenner,
- FIG 5: in Querschnittsdarstellung eine Silobrennkammer mit einem durch das Stützgerüst abgestützten Zwischenboden,
- FIG 6: in Querschnittsdarstellung eine Silobrennkammer mit einem vom Stützgerüst durchbrochenen Zwischenboden, und
- FIG 7: in einer Draufsicht ein Wärmekraftwerk mit einer Gasturbine.

Einander entsprechende Teile und Größen sind in allen Figuren jeweils mit gleichen Bezugszeichen versehen.

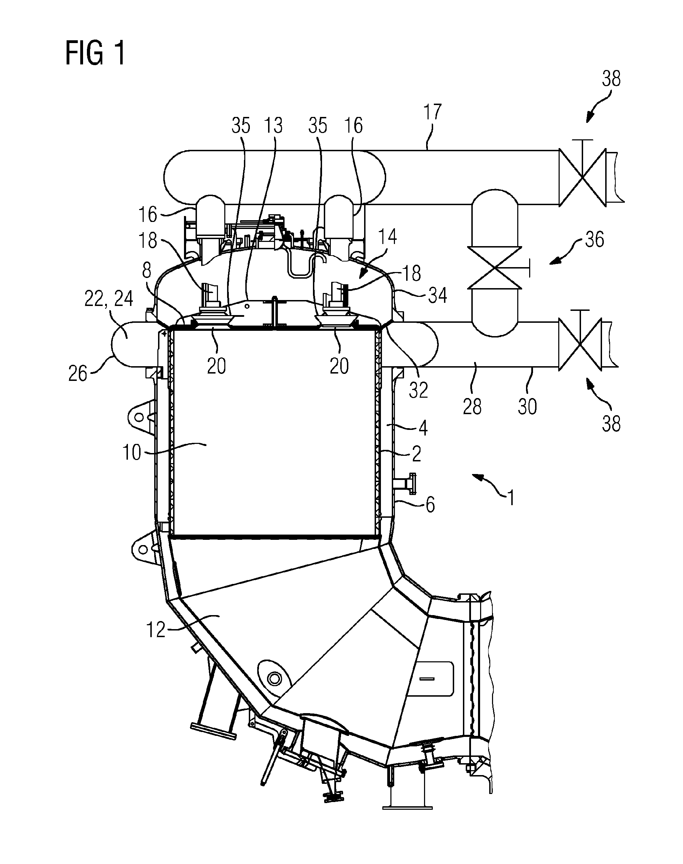

In FIG 1 ist in einer Querschnittsdarstellung eine Silobrennkammer 1 für eine nicht näher dargestellte Gasturbine gezeigt. Die Silobrennkammer 1 umfasst eine innere Wandung 2, welche unter Ausbildung eines Hohlraumes 4 von einer äußeren Wandung 6 umgeben ist. Die innere Wandung 2 begrenzt mit dem daran anschließenden Flammrohrboden 8 den im Wesentlichen zylinderförmigen Brennraum 10 des Flammrohres 12. Auf der dem Brennraum 10 abgewandten Seite des Flammrohrbodens 8, welcher dort durch ein Stützgerüst 13 verstärkt ist, führen zu einer ersten Sammelkammer 14 Zuleitungen 16 aus einem Leitungssystem 17 hin, welches mit einem in der Zeichnung nicht dargestellten Rekuperator koppelbar ist. Die Brenner 18 münden von der ersten Sammelkammer 14 durch Öffnungen 20 in den Brennraum 10.

Der Hohlraum 4 führt im Bereich des Flammrohrbodens 8 in eine zweite Sammelkammer 22, welche als eine das Flammrohr 12 umlaufende Ringkammer 24 ausgebildet ist. Zur Ausbildung der Ringkammer 24 weist hierbei ein Wandelement 26 der äußeren Wandung 6 einen U-förmigen Querschnitt auf, so dass hier der Abstand zwischen der inneren Wandung 2 und der äußeren Wandung 6 größer ist als im Hohlraum 4. Von der zweiten Sammelkammer 22 führt eine Ableitung 28 zu einem Leitungssystem 30 weg, welche mit einem in der Zeichnung nicht näher dargestellten Rekuperator koppelbar ist.

Die Ringkammer 24 ist gegen die erste Sammelkammer 14 durch eine umlaufende Krempe 32 am Flammrohrboden getrennt. Die erste Sammelkammer 14 wird begrenzt durch eine auf das Wandelement 26 der äußeren Wandung 6 geflanschte Haube 34, durch welche die Zuleitungen 16 und eine in der Zeichnung nicht näher dargestellte Brennstoffversorgung für die Brenner 18 geführt ist.

Das vorverdichtete Arbeitsgas strömt von einem nicht näher dargestellten Verdichter der Gasturbine in den Hohlraum 2 und von dort über die Ringkammer 24 in die Ableitung 28. Die Ableitung 28 führt über das Leitungssystem 30 zu einem Rekuperator, wo das Arbeitsgas durch Abwärme des Verbrennungsprozesses der Gasturbine erwärmt wird. Durch das Leitungssystem 17 wird das vom Rekuperator erwärmte Arbeitsgas über die Zuleitungen 16 in die erste Sammelkammer 14 geführt, wo es in die jeweilige Sauerstoffversorgung 35 der Brenner 18 strömen kann. In den Brennern 18 wird das verdichtete, vom Rekuperator erwärmte Arbeitsgas mit einem Brennstoff vermischt und in den Brennraum 10 des Flammrohres 12 verbrannt, wobei die Abgase und die Abwärme über das Flammrohr 12 zum Rekuperator abgeführt werden, wo mit der Abwärme das vorverdichtete Arbeitsgas erwärmt wird. Soll die Silobrennkammer zwischenzeitlich ohne Rekuperator betrieben werden, können die Leitungssysteme 17 und 30 über ein Kurzschlussventil 36 kurzgeschlossen werden, und die Verbindung zum Rekuperator über Ventile 38 unterbrochen werden.

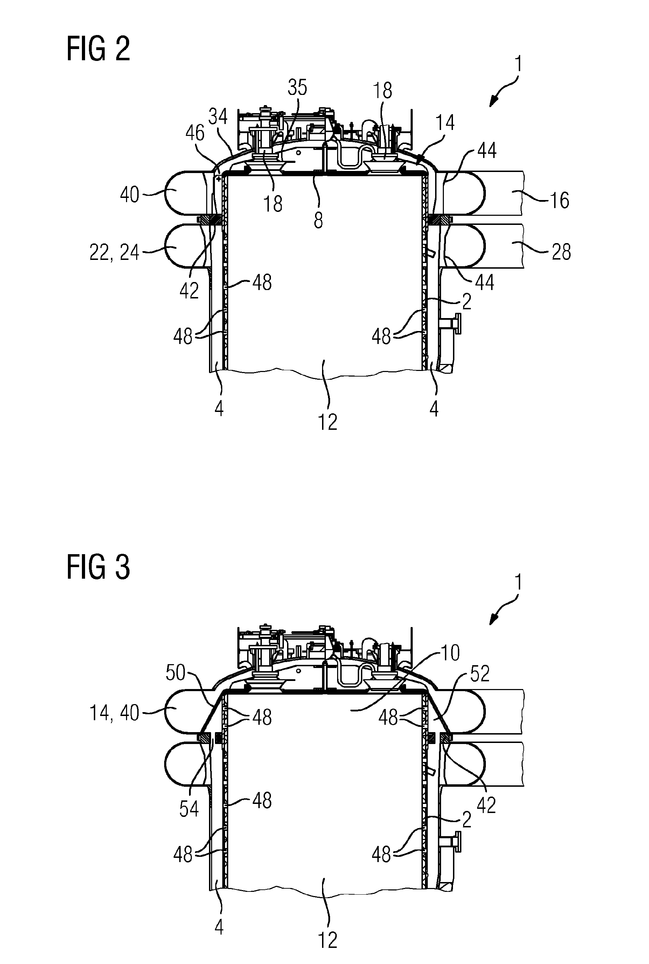

In FIG 2 ist in einer Querschnittsdarstellung eine weitere mögliche Ausgestaltung einer Silobrennkammer 1 für eine nicht näher dargestellte Gasturbine gezeigt. In dieser Ausgestaltung umfasst die erste Sammelkammer 14 eine Ringkammer 40, welche im Bereich des Flammrohrbodens 8 das Flammrohr 12 umläuft. Die erste Sammelkammer 14 samt ihrer Ringkammer 40 wird von einer Haube 34 begrenzt, welche auf einem die innere Wandung 2 umschließenden Flansch 42 befestigt ist. Der Flansch 42 trennt hierbei die Ringkammer 40 von der als Ringkammer 24 ausgebildeten zweiten Sammelkammer 22, welche in den Hohlraum 4 übergeht. Die Begrenzungswände der Ringkammern 24 und 40 werden hierbei durch Stützrippen 44 versteift. Von der zweiten Sammelkammer 22 führt eine Ableitung 28 zu einem nicht näher dargestellten Rekuperator, wo das vorverdichtete Arbeitsgas erwärmt wird, und dann über die Zuleitung 16 der Ringkammer 40 der ersten Sammelkammer 14 zugeführt wird. Durch den Spalt 46 in der ersten Sammelkammer 14 kann das erwärmte Arbeitsgas zur Sauerstoffversorgung 35 der Brenner 18 strömen.

Kleine Bohrungen 48 in der inneren Wandung bis zur Höhe des Flansches 42 können hierbei helfen, die innere Wandung zu kühlen. Das vorverdichtete Arbeitsgas, welches durch den Hohlraum 4 in die zweite Sammelkammer 22 strömt, kann Temperaturen von bis zu 400°C aufweisen. Die Temperatur im Bereich der Brenner kann über 1400°C betragen. Das Material des Flammrohrbodens 8 und der inneren Wandung muss für die entstehenden Brenntemperaturen ausgelegt sein, was zu Kosten, z.B. für Keramikplatten, führt.

Das durch Bohrungen 48 in der inneren Wandung 2 in den Brennraum 10 strömende vorverdichtete Arbeitsgas kühlt durch das Temperaturgefälle die innere Wandung 2 in diesem Bereich, so dass die Werkstoffe dort für einen geringeren Temperaturbereich ausgelegt werden können. Die Bohrungen 48 sind hierbei so fein auszugestalten, dass die Menge des die Bohrungen 48 zur Kühlung der inneren Wandung 2 durchströmende Arbeitsgases möglichst gering ist (unter Randbedingung einer gewünschten Mindestkühlleistung), und dass insbesondere kein nennenswerter Druckverlust im Hohlraum 4 stattfindet.

In FIG 3 ist die Anordnung der Silobrennkammer 1 nach FIG 2 unter einer leichten Modifikation als Querschnittdarstellung gezeigt. Innerhalb der Ringkammer 40 der ersten Sammelkammer 14 umläuft eine Manschette 50 das Flammrohr 12, wodurch zwischen der Manschette 50, dem Flansch 42 und der inneren Wandung 2 eine umlaufende Kammer 52 ausgebildet wird. Die umlaufende Kammer ist durch Bohrungen 54 mit dem Hohlraum 4 verbunden. Dies ermöglicht eine Kühlung der innere Wandung 2 bis zum Abschluss mit dem Flammrohrboden 8, indem das vorverdichtete Arbeitsgas feine Bohrungen 48 der inneren Wandung 2 zum Brennraum 10 hin durchströmt.

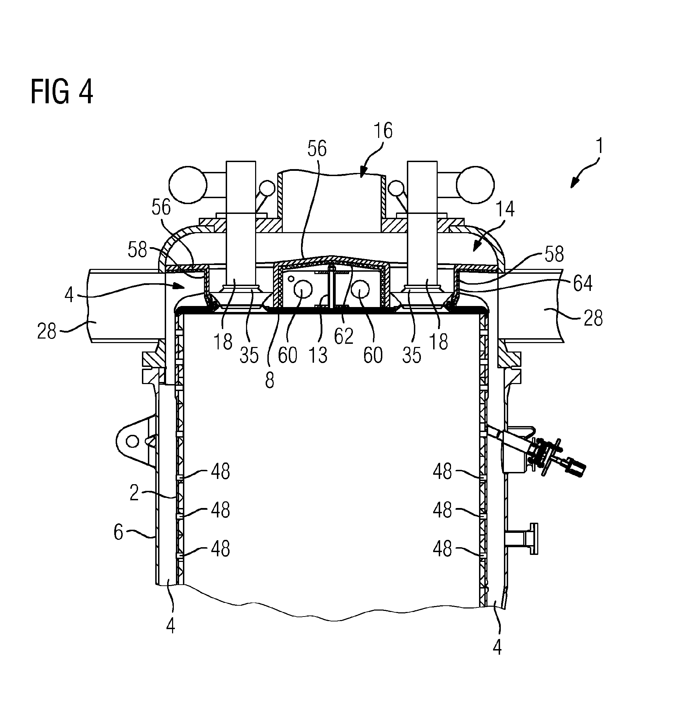

In FIG 4 ist in Querschnittdarstellung eine Silobrennkammer 1 für eine nicht näher dargestellte Gasturbine gezeigt, wobei die Silobrennkammer 1 ohne Ringkammern ausgeführt ist. Der Hohlraum 4 zwischen der inneren Wandung 2 und der äußeren Wandung 6 erstreckt sich hierbei bis über den Flammrohrboden 8, und ist von der ersten Sammelkammer 14 durch einen Zwischenboden 56 getrennt. Der Zwischenboden 56 ist in die Haube 34 integriert, welche auf die äußere Wandung 6 geflanscht ist. Die Brenner 18 werden durch Stutzen 58 vom Zwischenboden 56 zum Flammrohrboden 8 geführt. Der Zwischenboden 56 wird durch das Stützgerüst 13, gegen den Flammrohboden 8 abgestützt.

Vom Hohlraum 4 führen in Höhe des Flammrohrbodens 8 zwei Ableitungen 28 zu einem nicht dargestellten Rekuperator weg. Für eine vorteilhafte Druckverteilung vom Hohlraum 4 zu den Ableitungen 28 hin sind dabei Strömungslöcher 60 im Stützgerüst 13 eingebracht. Das vorverdichtete Arbeitsgas, welches vom Hohlraum 4 durch die Ableitungen 28 zum Rekuperator geführt wird, strömt nach Erwärmung durch eine Zuleitung 16 in die erste Sammelkammer 14 zur Sauerstoffversorgung 35 der Brenner 18. In die innere Wandung 2 und in den Flammrohrboden 8 können hierbei feine Bohrungen 48 zur Kühlung eingebracht sein. Zur Verbesserung des Wirkungsgrades weisen der Zwischenboden 56 und die Stutzen 58 jeweils thermische Isolationsschichten 62 bzw. 64 auf, die einen Wärmeaustausch zwischen dem vorverdichteten Arbeitsgas im Hohlraum 4 mit dem bereits erwärmten Arbeitsgas in der Sammelkammer 14 über den Zwischenboden 56 und die Stutzen 58 erschweren.

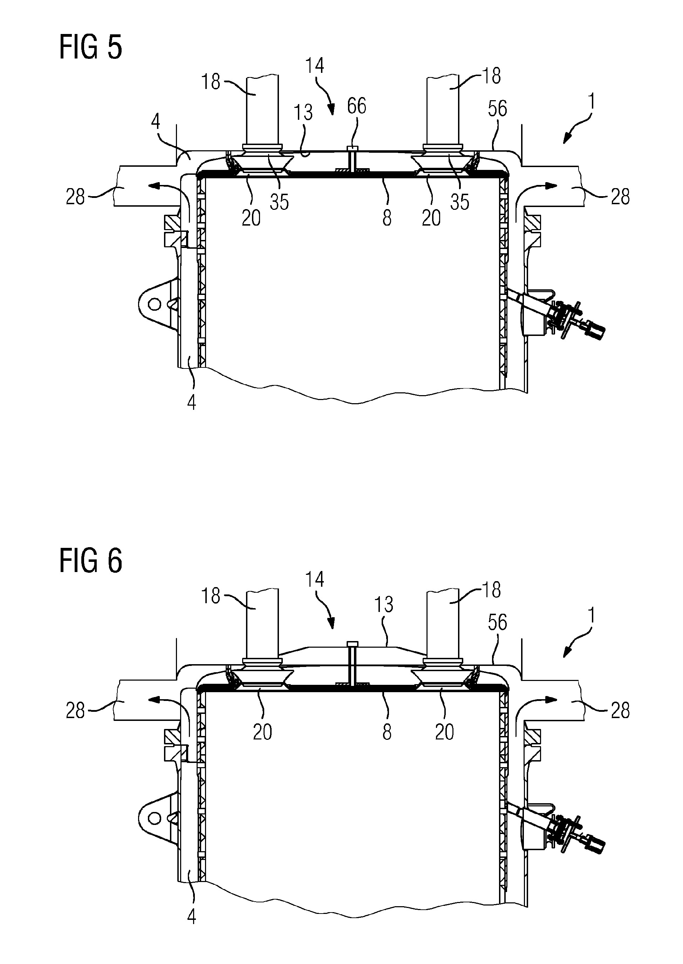

In FIG 5 ist in einer Querschnittdarstellung eine weitere Ausgestaltung einer Silobrennkammer 1 gezeigt. Ähnlich der vorherigen Darstellung erstreckt sich hier der Hohlraum 4, welcher zwischen der inneren Wandung 2 und der äußeren Wandung 6 gebildet wird, über den Flammrohrboden 8, und wird gegen die erste Sammelkammer 14 durch einen Zwischenboden 56 begrenzt, welcher gegen den Flammrohrboden 8 durch das Stützgerüst 13 abgestützt ist. Vom Hohlraum 4 führen im Bereich des Flammrohrbodens zwei Ableitungen 28 zum in der Zeichnung nicht dargestellten Rekuperator.

Im Unterschied zur in FIG 4 gezeigten Ausgestaltung sind die Brenner 18 direkt durch den Zwischenboden 56 zu den Öffnungen 20 im Flammrohrboden 8 geführt, die strömungstechnische Trennung der Sauerstoffversorgung 35 der Brenner 18 vom Hohlraum 4 erfolgt also nur durch den Zwischenboden 56 und die Wand des jeweiligen Brenners 18. Der Zwischenboden 56 ist, von Seiten der ersten Sammelkammer 14, mit einer Nietenverbindung 62 am Stützgerüst 13 befestigt, so dass er dem leichten Überdruck, welcher im Hohlraum 4 gegenüber der ersten Sammelkammer 14 herrscht, standhält. Die Zuleitung zur ersten Sammelkammer und die die erste Sammelkammer begrenzende Haube sind nicht näher dargestellt.

Eine Variation der in FIG 5 gezeigten Ausgestaltung ist in FIG 6 dargestellt. In FIG 6 ist eine Silobrennkammer 1 gezeigt, wobei das Stützgerüst 13, welches auf dem Flammrohrboden 8 angeordnet ist, durch Einschnitte im Zwischenboden 56 in die erste Sammelkammer 14 ragt.

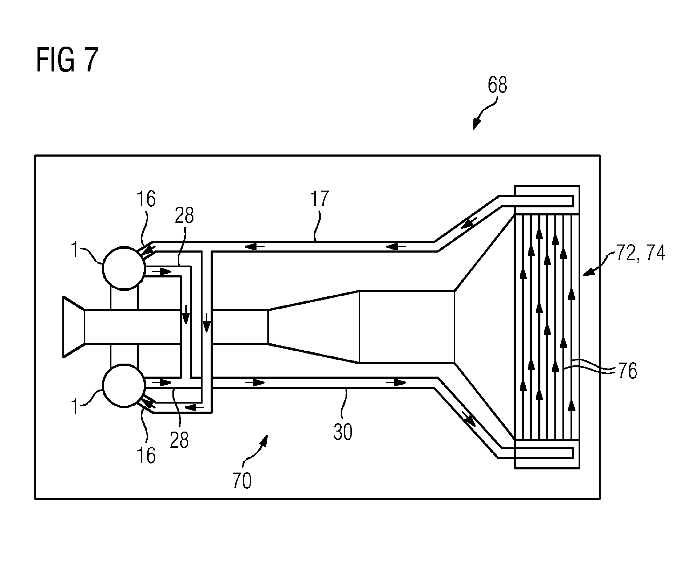

In FIG 7 ist in einer schematischen Draufsicht ein Wärmekraftwerk 68 mit einer Gasturbine 70 dargestellt, welche zwei Silobrennkammern 1 aufweist. Von den jeweils nicht näher dargestellten Hohlräumen führt über Ableitungen 28 ein Leitungssystem 30 zum als Rekuperator 72 ausgebildeten Wärmetauscher 74. In diesem wird in feinen Rohren 76, welche hier schematisch angezeigt sind, das vorverdichtete Arbeitsgas, welches über das Leitungssystem 30 dem Rekuperator 72 zugeführt wird, durch die Abwärme des Verbrennungsprozesses der Gasturbine 70 erwärmt. Das erwärmte Arbeitsgas wird über ein Leitungssystem 17 den jeweiligen Zuleitungen 16 der Silobrennkammern 1 zugeführt, wo es jeweils in die erste Sammelkammer gelangt, und dort zur Sauerstoffversorgung der Brenner strömt, wo es mit dem Brennstoff vermischt und in den Brennraum verbrannt wird. Hierbei wird die Abwärme erzeugt, welche im Rekuperator 72 das vorverdichtete Arbeitsgas erwärmt. Die erste Sammelkammer, die Brenner, deren Sauerstoffversorgung und die Brennräume sind in der Zeichnung nicht näher dargestellt.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

## Patentansprüche

1. Silobrennkammer (1) für eine Gasturbine (70), umfassend ein durch eine innere Wandung (2) und einen Flammrohrboden (8) gebildetes Flammrohr (12), welches einen Brennraum (10) begrenzt,
eine äußere Wandung (6), welche die innere Wandung (2) unter Ausbildung eines Hohlraumes (4) umgibt,
wenigstens eine strömungstechnisch mit dem Hohlraum (4) verbundene Ableitung (28),
eine lokal strömungstechnisch vom Hohlraum (4) getrennte erste Sammelkammer (14) mit wenigstens einer Zuleitung (16), wobei die wenigstens eine Ableitung (28) des Hohlraums (4) und die wenigstens eine Zuleitung (16) der ersten Sammelkammer (14) über einen Wärmetauscher (74) strömungstechnisch koppelbar sind, und
eine Anzahl von Brennern (18), welche jeweils ausgangsseitig durch eine Öffnung (20) im Flammrohrboden (8) in den Brennraum (10) münden und zur Sauerstoffversorgung (35) strömungstechnisch mit der ersten Sammelkammer (14) verbunden sind.

2. Silobrennkammer (1) nach Anspruch 1,
wobei der Flammrohrboden (8), dem Brennraum (10) abgewandt, ein Stützgerüst (13) aufweist.

3. Silobrennkammer (1) nach Anspruch 2,
wobei das Stützgerüst (13) durch zum Flammrohrboden (8) senkrechte Lamellen gebildet wird

4. Silobrennkammer (1) nach einem der vorhergehenden Ansprüche,
wobei die innere Wandung (2) und/oder der Flammrohrboden (8) eine Vielzahl von Bohrungen (48) aufweisen.

5. Silobrennkammer (1) nach einem der vorhergehenden Ansprüche,
wobei sich der Hohlraum (4) über den Flammrohrboden (8) erstreckt, und wobei die erste Sammelkammer (14) gegen den Hohlraum (4) durch einen Zwischenboden (56) getrennt ist.

6. Silobrennkammer (1) nach Anspruch 5,
wobei der Zwischenboden (56) durch das Stützgerüst (13) gegen den Hohlraum (4) abgestützt wird.

7. Silobrennkammer (1) nach Anspruch 5,
wobei das Stützgerüst (13) durch Einschnitte im Zwischenboden (56) in die erste Sammelkammer (14) ragt.

8. Silobrennkammer (1) nach einem der Ansprüche 5 bis 7, wobei der oder jeder Brenner (18) durch eine Öffnung im Zwischenboden (56) in den Hohlraum (4) geführt ist.

9. Silobrennkammer (1) nach einem der Ansprüche 5 bis 8,wobei der oder jeder Brenner (18) von einem Stutzen (58) umschlossen wird, welcher vom Zwischenboden (56) zur jeweiligen Öffnung (20) des Brenners (18) im Flammrohrboden (8) führt, und durch welchen der Brenner strömungstechnisch vom Hohlraum (4) getrennt ist.

10. Silobrennkammer (1) nach Anspruch 9,
wobei der oder jeder Stutzen (58) eine thermische Isolationsschicht (64) umfasst.

11. Silobrennkammer (1) nach einem der Ansprüche 5 bis 10, wobei der Zwischenboden (56) eine thermische Isolationsschicht (62) umfasst.

12. Silobrennkammer (1) nach einem der Ansprüche 1 bis 5 oder 8 bis 11,
wobei die wenigstens eine Ableitung (28) strömungstechnisch mit dem Hohlraum (4) über eine zweite Sammelkammer (22) verbunden ist, zu deren Ausbildung der Abstand zwischen der inneren Wandung (2) und der äußeren Wandung (6) vergrößert ist, und wobei die zweite Sammelkammer (22) strömungstechnisch lokal von der ersten Sammelkammer (14) getrennt ist.

13. Silobrennkammer (1) nach Anspruch 12,
wobei die zweite Sammelkammer (22) als eine das Flammrohr (12) umlaufende Ringkammer (24) ausgebildet ist.

14. Silobrennkammer (1) nach einem der vorhergehenden Ansprüche,
wobei die erste Sammelkammer (14) eine das Flammrohr (12) umlaufende Ringkammer (40) umfasst.

15. Silobrennkammer (1) nach Anspruch 13 oder Anspruch 14, wobei wenigstens eine umlaufende Ringkammer (24, 40) eine Anzahl von Stützrippen (44) aufweist.

16. Silobrennkammer (1) nach Anspruch 14 oder Anspruch 15, wobei die umlaufende Ringkammer (40) der ersten Sammelkammer (14) und die als Ringkammer (24) ausgebildete zweite Sammelkammer (22) durch einen das Flammrohr (12) umlaufenden Flansch (42) voneinander getrennt sind, und wobei die umlaufende Ringkammer (40) der ersten Sammelkammer (14) das Flammrohr (12) im Bereich des Flammrohrbodens (8) umläuft.

17. Silobrennkammer (1) nach Anspruch 16,
wobei der Zwischenboden (56) eine das Flammrohr (12) auf dem Flansch (42) unter Ausbildung einer umlaufenden Kammer (52) umlaufende Manschette (50) umfasst, wobei die umlaufende Kammer (52) mit dem Hohlraum (4) durch eine Anzahl von Bohrungen (54) im Flansch (42) strömungstechnisch verbunden ist.

18. Silobrennkammer (1) nach einem der vorhergehenden Ansprüche,
wobei das Flammrohr (12) im Wesentlichen zylinderförmig ist.

19. Silobrennkammer (1) nach Anspruch 18,
wobei die Anordnung des oder jedes Brenners (18) im Flammrohrboden (12) drehsymmetrisch ist.

20. Silobrennkammer (1) nach einem der vorhergehenden Ansprüche,
wobei die erste Sammelkammer (14) durch eine auf die äußere Wandung (6) geflanschte Haube (34) begrenzt wird.

21. Gasturbine (70), umfassend wenigstens eine Silobrennkammer (1) nach einem der Ansprüche 1 bis 20, und einen insbesondere als Rekuperator (72) ausgebildeten Wärmetauscher (74),
wobei wenigstens eine Ableitung (28) des Hohlraums (4) der oder jeder Silobrennkammer (1) und wenigstens eine Zuleitung (16) der ersten Sammelkammer (14) der oder jeder Silobrennkammer (1) über den Rekuperator (72) strömungstechnisch gekoppelt sind.

22. Wärmekraftwerk (68) mit einer Gasturbine (70) nach Anspruch 21.
